# EUROPEAN PATENT SPECIFICATION

(11) **EP 1 165 995 B1**
(45) Date of publication and mention of the grant of the patent: **26.05.2004**
(21) Application number: 00909475.6
(22) Date of filing: 14.03.2000
(51) Int. Cl.: F16L 3/16, F16L 3/133

(54) **PIVOTABLE SUSPENSION ELEMENT**
SCHWENKBARE AUFHÄNGUNGSVORRICHTUNG
ELEMENT DE SUSPENSION PIVOTABLE

(30) Priority: 31.03.1999 GB 9907314
(43) Date of publication of application: 02.01.2002
(73) Proprietor: Tyco European Metal Framing Limited, Leeds LS11 5UG (GB)
(72) Inventor: KLIPPEL, Simon, Knaresborough, North Yorkshire HG5 9DU (GB); JORDAN, Matthew, Bankfoot, Bradford BD5 9BD (GB); HARVEY, Simon, Rawdon, Leeds LS19 6BZ (GB); GILL, Neil Frank, Wrose, Shipley, West Yorkshire BD18 1NS (GB)
(74) Representative: Stuttard, Garry Philip
(86) International application number: PCT/GB2000/000887
(87) International publication number: WO 2000/058656

(56) References cited:
- EP-A- 0 677 689
- US-A- 1 572 636
- US-A- 3 572 623
- US-A- 4 240 602

## Description

The present invention relates to a swivel device for use in conjunction with a vertical suspension assembly, to the suspension assembly and to a method for using such assembly according to claims 1, 2, 18.

Numerous suspension assemblies for suspending an ancillary component from a horizontal surface (such as a floor or ceiling) are known. Generally speaking, these are arranged to permit ancillary components such as pipes, light fittings, cable ducts and decorative panels to be reliably suspended from the horizontal surface. Many of the suspension assemblies are described in the literature including the toggle clamp described in EP-A-733812 (Glynwed International Plc), the Purlin clamp described in GB-A-2310022 (Glynwed International Plc) and the various arrangements described in GB-A-2337077 and UK patent application no 9904466.1 (Glynwed Engineered Products Limited).

EP-A-0677689 considered to be the closest prior art, discloses a system for suspending an ancillary structural component from a surface which comprises a swivel device with a cradle from which is suspended a suspension means attachable to the ancillary structural component.

Whilst a considerable amount of effort has gone into developing these different suspension assemblies, there is in general a need for suspension assemblies to be improved so that ancillary components may be positioned in a number of different configurations.

The present invention seeks to fulfil this need by providing a versatile swivel device which may be used in conjunction with a suspension assembly to impart a greater degree of articulation to a suspended ancillary component. This has been achieved by developing a swivel device which is cost effective, compact and strong in an intermediate position between the suspension rod and the fixing arrangement of the suspension assembly.

Thus viewed from one aspect the present invention provides a swivel device for use in conjunction with a suspension assembly which comprises a suspension means and fixing arrangement, said swivel device comprising:
a hollow, substantially cylindrical housing mounted radially on a substantially central portion of a spindle; and
a cradle having a base adapted to suspend the suspension means, opposed side walls and an open end, wherein said cradle is mounted on the ends of said spindle so as to provide a degree of articulation between the cradle and the housing,
wherein the housing is attachable to said fixing arrangement so as to permit axial rotation of said cylindrical housing.

The swivel device of the invention advantageously provides a degree of articulation between the housing and the cradle which may be imparted to the suspension rod suspended from the cradle and therefore.to any ancillary component attached to the suspension rod. The degree of articulation is essentially a pendular degree of freedom imparted to the cradle relative to the longitudinal axis of the housing. The degree of pendular freedom may be 90° or less, preferably between 10° and 50°.

The rotational freedom of the housing is imparted to the cradle by virtue of their mounting on the spindle. The combination of rotational freedom and pendular freedom allows the cradle to perform precessional motion of up to 360°.

Preferably, the base of the cradle is threadedly adapted to suspend a suspension rod. For example, the cradle may act as a basket for a threaded nut to which is accessible a threaded suspension rod through a suitable aperture in the base of the cradle. For this purpose, the threaded nut is retained within the base of the cradle by means of opposite retaining walls extending from the base of the cradle perpendicularly to the opposed side walls.

The spindle preferably comprises a pin, bar or similar device which may be mounted radially on the cylindrical housing. The spindle should be long enough to accommodate the housing on its central portion and the opposed side walls of the cradle at its ends. The outermost ends of the spindle may be secured to the exterior of the cradle in a conventional manner.

In accordance with the swivel device of the invention, the cylindrical housing is adapted to attach a fixing arrangement of a vertical suspension assembly. In a preferred embodiment, the end of the cylindrical housing is provided with an internal, circumferential lip for capturing internally at least a part of a fastener component. Preferably the fastener component is threaded. For example, the head of an elongate threaded fastener component (eg a bolt) may be captured internally and the body of the elongate threaded fastener may extend exteriorly for attaching the fixing arrangement. Alternatively, a threaded nut may be captured internally to which may be fastened an elongate threaded fastener or a short section of threaded rod which is attached to the fixing arrangement. The cylindrical housing is advantageously sized so that the captured portion of the fastener component is effectively seated on the spindle to substantially eliminate axial movement of the fastener component in the housing.

The versatility of the swivel device of the invention is such that it is envisaged that it may be used in conjunction with any vertical suspension assembly known in the art including those of EP-A-733812 (Glynwed International Plc), GB-A-2310022 (Glynwed International Plc), GB-A-2337077 (Glynwed Engineered Products Limited) and UK patent application no. 9904466.1 (Glynwed Engineered Products Limited).

Viewed from a further aspect the present invention provides a system for suspending an ancillary component from a horizontal surface (eg floor or ceiling) comprising a swivel device as hereinbefore defined and a suspension assembly which comprises a suspension rod and fixing arrangement,
wherein said suspension rod is suspended from the cradle of said swivel device, said fixing arrangement is attached to the housing of said swivel device so as to permit axial rotation of said cylindrical housing and said ancillary component is attached to the lower end of said suspension rod.

Viewed from a yet further aspect the present invention provides a method for suspending an ancillary component from a horizontal surface (eg floor or ceiling) using a swivel device as hereinbefore defined and a suspension assembly which comprises a suspension rod and fixing arrangement,
attaching the housing of said swivel device to said fixing arrangement;
suspending the suspension rod from the base of the cradle; and
attaching the ancillary component to the suspension rod.

In a preferred embodiment of the system of the invention, the swivel device is used in conjunction with a beam clamp of the type described in International patent application no. GB00/00527 (Tyco European Metal Framing Ltd) for attaching ancillary structural components such as fixing brackets, pipe supports or electrical conduits to a structural beam. This embodiment is particularly advantageous since it is possible to attach the swivel device of the invention directly at the clamping region of the assembly. This improves the clamping characteristics of the beam clamp by making the swivel device and suspended suspension rod an integral part of the clamping effect. Particularly preferably, the beam clamp comprises two overlapping, substantially C-shaped plates having two arms extending from an arcuate rear portion, wherein adjacent arms on said plates are interconnected by means of a boss, wherein each boss defines a substantially tubular, non-threaded path. In accordance with the invention, a threaded fastener component (eg bolt) may be inserted through the non-threaded lower boss and fastened to a nut captured within the cylinder of the swivel device. Especially preferably, the head of the threaded fastener component is cup shaped and adapted to seat on the uppermost surface of the lower boss which will advantageously improve the purchase on the surface of the beam in use.

The invention will now be described with reference to the accompanying Figures in which:
Figure 1 illustrates a preferred embodiment of the swivel device of the invention in cross-section (1a), from below (1b) and from the front (1c);
Figure 2 illustrates a perspective view of a preferred embodiment of the swivel device together with a beam clamp;
Figure 3 illustrates a preferred embodiment of the swivel device assembled with a beam clamp in frontal view (3a), in cross-sectional view (3b) and disassembled (3c);
Figure 4 illustrates a preferred embodiment of the swivel device of the invention together with a beam clamp attached to a beam;
Figure 5 illustrates a preferred embodiment of the swivel device of the invention together with a toggle clamp;
Figure 6 illustrates a preferred embodiment of the swivel device of the invention together with a multi-wedge fixing;
Figure 7 illustrates a preferred embodiment of the swivel device of the invention together with an alphawedge fixing;
Figure 8 illustrates a preferred embodiment of the swivel device together with a Slimdek fixing;
Figure 9 illustrates a preferred embodiment of the swivel device of the invention together with a wrap around Purlin fixing;
Figure 10 illustrates a preferred embodiment of the swivel device of the invention together with a one-piece wrap around Purlin fixing; and
Figure 11 illustrates a preferred embodiment of the swivel device of the invention together with a Purlin clamp.

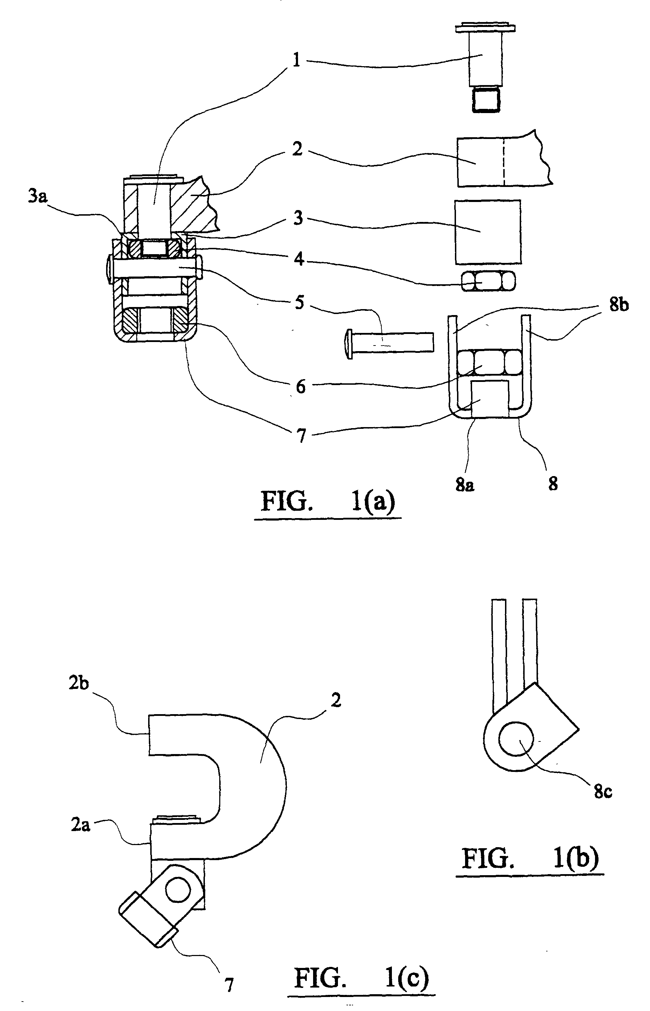

With reference to the accompanying Figure 1a, a preferred swivel device of the invention is shown assembled (in cross-section) and disassembled. The cradle 8 having opposed side walls 8b and base 8a is provided with an aperture (see 8c on Figure 1b) through which is receivable an upper threaded portion of a suspension rod (not shown). Nut 6 is housed at the basal end 8a of the cradle 8 in order to fasten and suspend a suspension rod passing through aperture 8c. Each of opposed side walls 8b are provided with co-linear holes to receive each end of a pin 5 passed therethrough. Pin 5 also passes through the walls of hollow cylinder 3 in order to mount the cylinder on the central portion of the pin within the opposed side walls 8b of the cradle. The upper end of hollow cylinder 3 is provided with an internal circumferential lip 3a which serves to capture the nut 4. Nut 4 is seated on pin 5 and is attached to bolt 1 passing through a portion of a beam clamp shown in truncated form 2 in Figure 1a. Cradle 8 is provided with opposed retaining walls 7 which prevent nut 6 escaping.

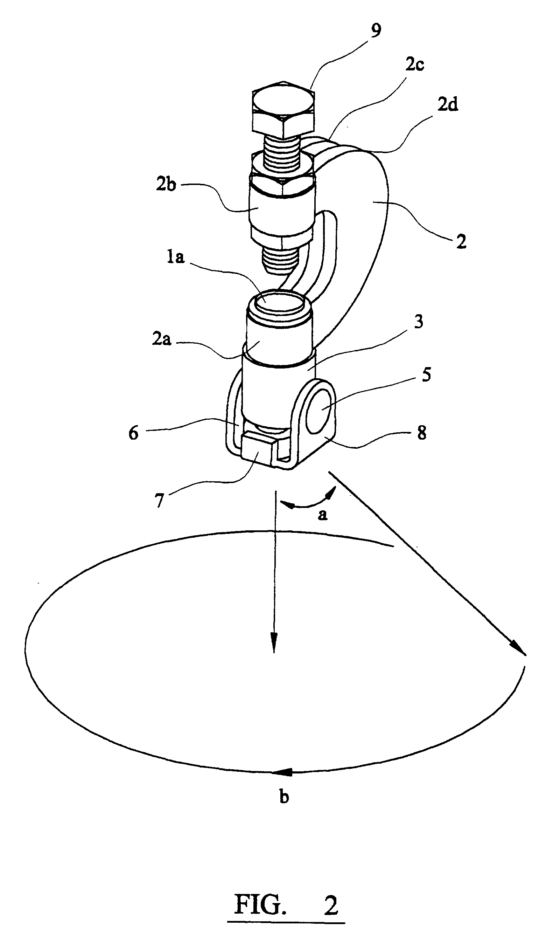

In the particular embodiment of Figures 1 and 2, the swivel device is attached to a beam clamp 2 of the type described in International patent application no. GB00/00527 (Tyco European Metal Framing Ltd). The beam clamp 2 is shown in truncated form in Figure 1a and more fully in Figures 1c and 2. It comprises two substantially C-shaped parallel plates 2c,2d in which adjacent arms on each substantially C-shaped plate are interconnected by a non-threaded boss 2a,2b. Each boss defines a substantially tubular, non-threaded path for receiving bolt 1. In this embodiment, bolt 1 passes through boss 2a and is threadedly captured in nut 4 within cylinder 3. This enables the swivel device to have 360° rotation relative to the axis of the cylinder 3 as shown in Figure 1b. At the same time, cradle 8 is provided with pendular freedom of about 45° to the vertical (see Figure 1c). In figure 2, the numbering of Figure 1 has been adhered to and in addition a fastener 9 is shown within the upper boss 2b of beam clamp 2. The head 1a of bolt 1 is substantially cup shaped. This improves the purchase on the lower surface of a beam which in use is captured within the jaws of the beam clamp between fastener 9 and cup 1a. It will be apparent from Figure 2 that the axial rotation (b) and pendular freedom (a) together permit precessional movement of the swivel device and connected suspension rod (not shown) about 360°.

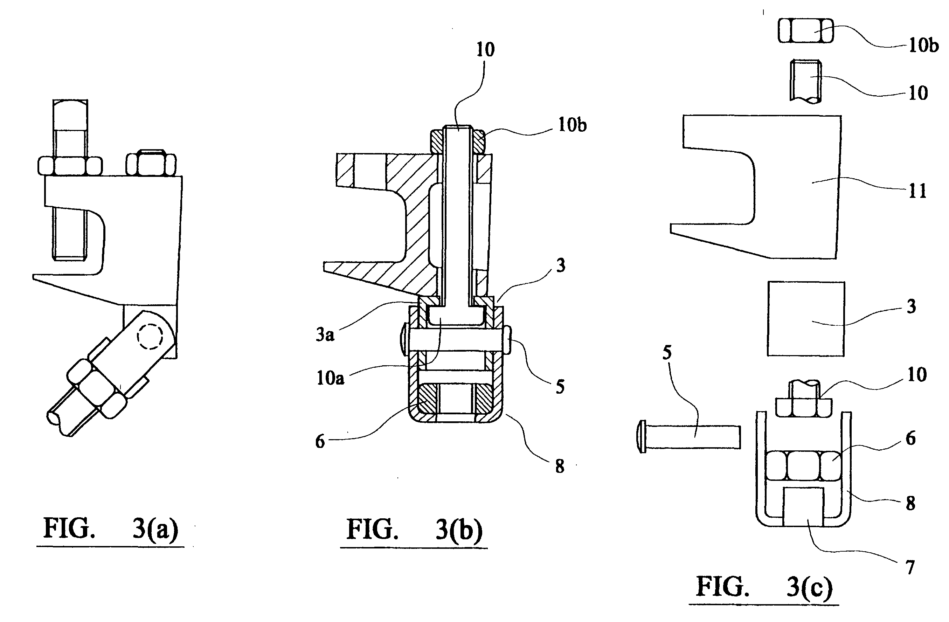

Figure 3 illustrates a preferred embodiment of the swivel device of the invention in conjunction with an alternative beam clamp 11. This type of beam clamp will be familiar to those skilled in the art. The detailed arrangement of this embodiment is similar to that illustrated in Figures 1 and 2 and the numbering has been adhered to. In this case, the head 10a of elongate fastening means 10 is captured within the hollow cylinder 3 between the circumferential lip 3a and pin 5. The main body of the threaded fastener 10 passes through the rear portion of beam clamp 11 and is fastened at the top end using an appropriate nut 10b.

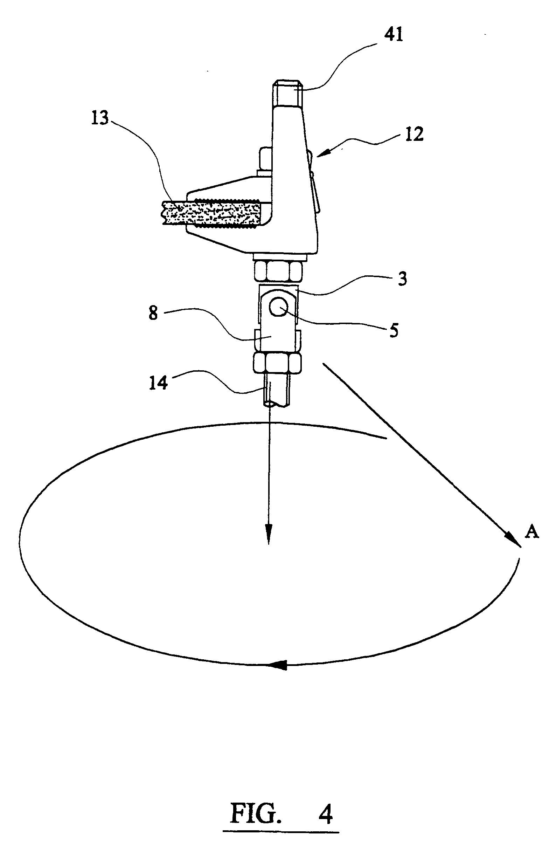

Figure 4 shows a preferred embodiment of the swivel device of the invention in conjunction with a beam clamp 12. This is shown attached to a beam in truncated form 13. The swivel device is attached to the beam clamp by means of elongate bolt 41 which is fastened by means of a captured nut (not shown). Suspension rod 14 is in this case provided with processional freedom about path A.

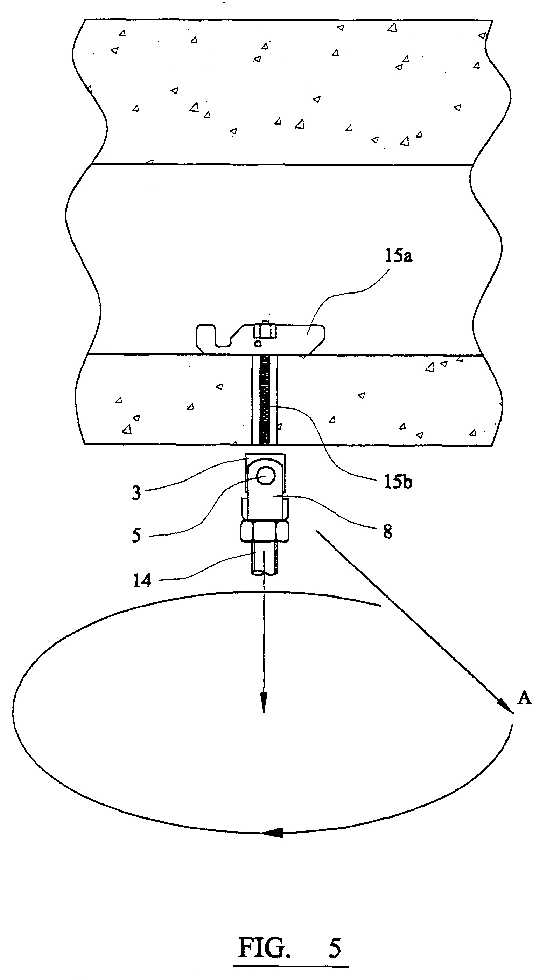

Figure 5 illustrates a preferred embodiment of the swivel device in conjunction with a toggle assembly 15 of the type disclosed in EP-A-733812 (Glynwed International Plc). The lower part of threaded portion 15b is captured in the cylinder 3 in the manner described with reference to Figure 1 (*ie* using an appropriate nut).

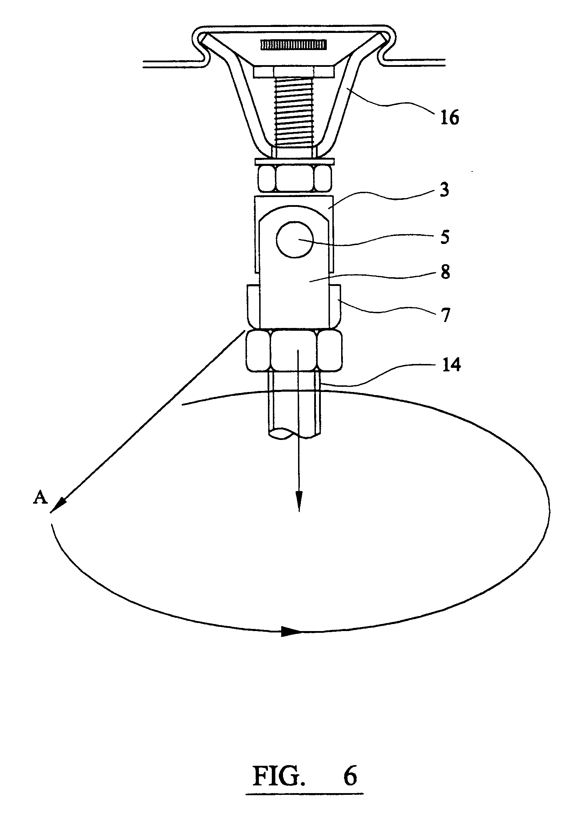

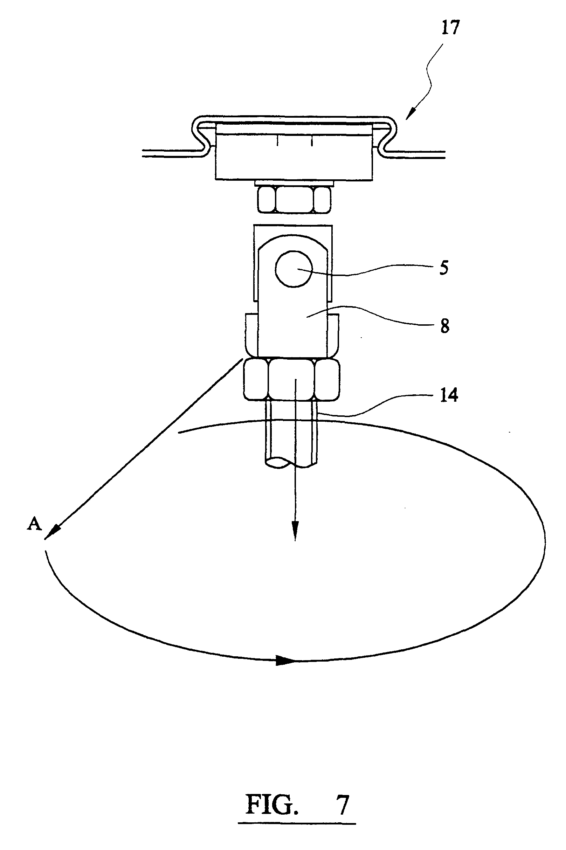

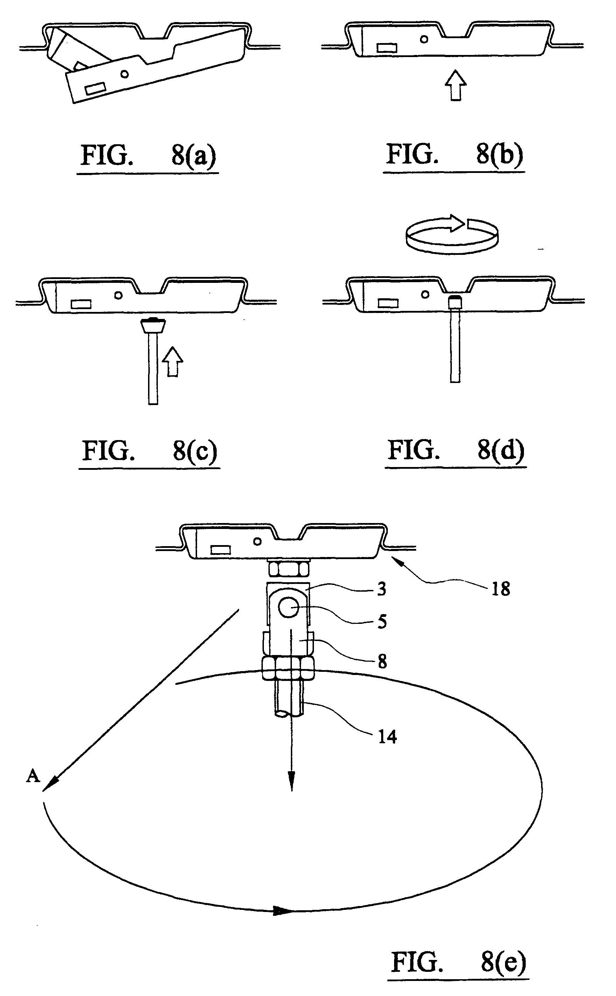

Figures 6, 7 and 8 show a preferred swivel device of the invention in conjunction with various wedged fixing devices, namely a multi-wedge 16, an alphawedge 17 and a Slimdek fixing 18 respectively. Figure 8 shows the various stages of operation of the Slimdek fixing which will in any case be apparent to those skilled in the art.

The mode of attachment of the fixing to the swivel device in each of Figures 5, 6, 7 and 8 is a short section of suspended threaded rod or an elongate bolt essentially normal to the fixing which is fastened by a nut captured in the swivel device. The rod or bolt is integral to the clamping action of the fixing device.

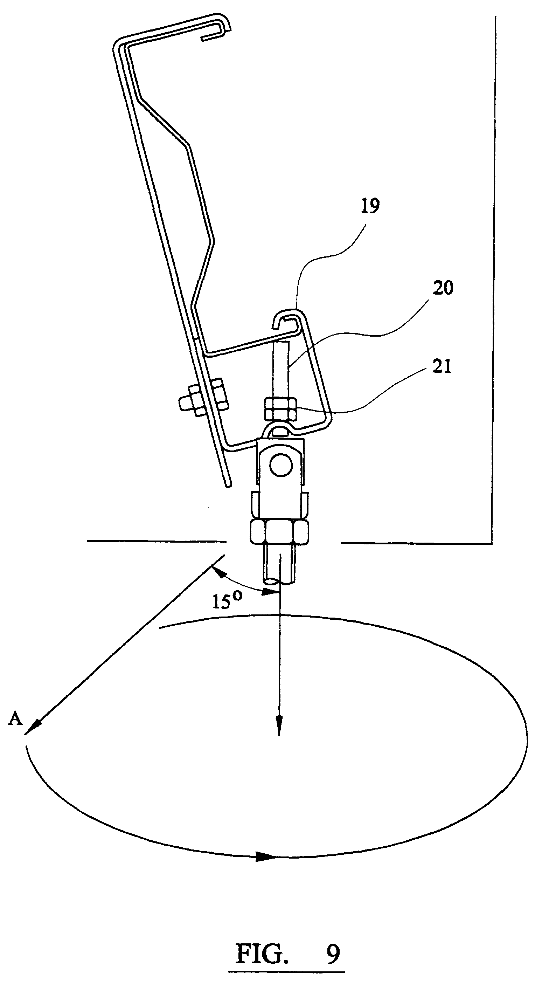

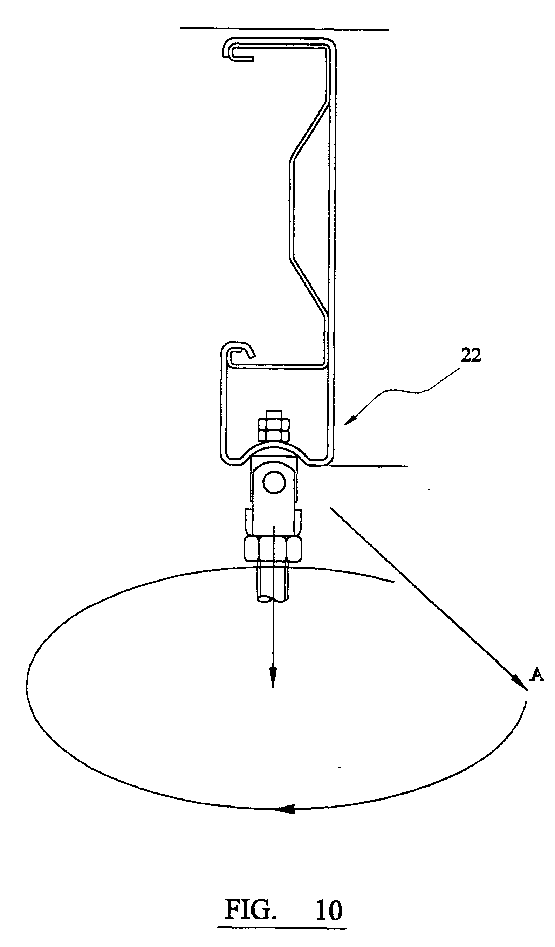

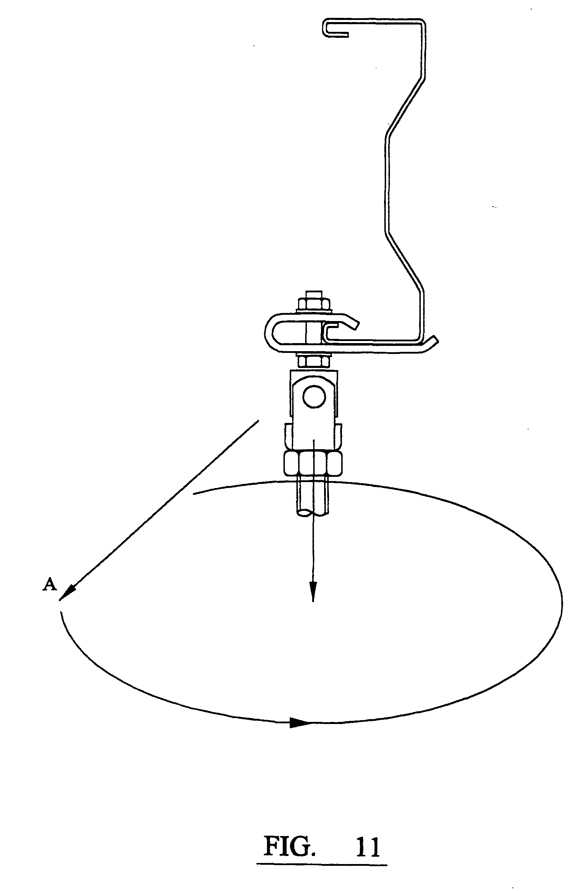

Figure 9 illustrates a preferred embodiment of the swivel device of the invention in conjunction with a wrap-around Purlin clamp 19. The wrap-around Purlin clamp 19 is attached to the swivel device using an M10 drop rod 20 and M10 nuts 21. In this particular arrangement, approximately 15° of pendular freedom either side of the vertical is permitted with full precessional motion A. The mode of attachment is similar to that described with references to Figures 5 to 8. A similar arrangement is shown in Figure 10 in which the Purlin fixing is a one-piece wrap-around Purlin fixing 22. A yet further alternative is the Purlin clamp 23 shown in Figure 11.

## Claims

1. A swivel device for use in conjunction with a suspension assembly which comprises a suspension means and fixing arrangement, said swivel device comprising:
a cradle (8) having a base (8a), opposed side walls (8b) and an open end, wherein said cradle is mounted on the ends of a spindle (5) and
a hollow, substantially cylindrical housing (3) mounted radially on a substantially central portion of the spindle, wherein the spindle passes through the walls of the cylindrical housing whereby to mount the housing within the opposed side walls of the cradle so as to provide a degree of articulation between the cradle and the housing, wherein the upper end of the cylindrical housing is provided with an internal circumferential lip for capturing internally at least a part of a fastener component.

2. A system for suspending an ancillary structural component from a horizontal surface comprising:
a swivel device comprising:
a cradle (8) having a base (8a), opposed side walls (8b) and an open end, wherein said cradle is mounted on the ends of a spindle (5); and
a hollow, substantially cylindrical housing (3) mounted radially on a substantially central portion of the spindle, wherein the spindle passes through the walls of the cylindrical housing whereby to mount the housing within the opposed side walls of the cradle so as to provide a degree of articulation between the cradle and the housing;
a suspension means suspended from the base of the cradle of said swivel device, said ancillary structural component being attachable to the lower end of said suspension means; and
a fixing arrangement (2) attached to the housing of said swivel device so as to permit axial rotation of said cylindrical housing with respect to the fitting arrangement, wherein the upper end of the cylindrical housing provided with an internal circumferential lip (3a) is capturing internally at least a part of a fastener component, wherein said at least a part of a fastener component is either (1) a nut (4) seated on the spindle and threadedly fastenable to an external threaded rod for attaching the fixing arrangement or (2) the head of an elongate threaded fastener so that the body of the elongate threaded fastener extends exteriorly for attaching the fixing arrangement.

3. A system as claimed in claim 2 wherein the suspension means is a suspension rod.

4. A system as claimed in any preceding claim wherein the degree of articulation is essentially a pendular degree of freedom imparted to the cradle (8) relative to the longitudinal axis of the housing (3).

5. A system as claimed in claim 4 wherein the degree of pendular freedom may be 90° or less.

6. A system as claimed in claim 4 or 5 wherein the degree of pendular freedom is between 10° and 50°.

7. A system as claimed in any preceding claim wherein said base (8a) of the cradle (8) is provided with an aperture (8c) through which is received an upper portion of the suspension means.

8. A system as claimed claim 7 wherein a fastener component is housed internally of the cradle (8) at the base (8a) so as to fasten and suspend a suspension means passing through said aperture.

9. A system as claimed in claim 8 wherein the cradle is provided with opposed retaining walls (7) which capture the fastener component, said opposed retaining walls (7) extending from the base (8a) of the cradle (8) perpendicularly to the opposed side walls (8b).

10. A system as claimed in either of claims 8 or 9 wherein the fastener component is a threaded nut (6) seated internally on the base (8a) of the cradle (8).

11. A system as claimed in any of claims 2 to 7 wherein the base (8a) of the cradle (8) is threadedly adapted to suspend the suspension means.

12. A system as claimed in any preceding claim wherein each of the opposed side walls (8b) is provided with substantially co-linear holes to receive each end of the spindle (5).

13. A system as claimed in claim 2 wherein the cylindrical housing (3) is sized so that the captured portion of the fastener component is effectively seated on the spindle (5) to substantially eliminate axial movement of the captured portion of the fastening means in the housing.

14. A system as claimed in any preceding claim wherein the spindle (5) comprises a pin or bar upon which may be mounted radially the cylindrical housing (3).

15. A system as claimed in any preceding claim wherein the fixing arrangement (2) comprises a beam clamp, a toggle assembly, wedged fixing device or a Purlin clamp.

16. A system as claimed in 15 wherein the wedged fixing device is a multi-wedge, an alphawedge or a Slimdek fixing.

17. A system as claimed in claim 15 wherein the Purlin clamp is a wrap-around Purlin clamp or a one-piece wrap-around Purlin fixing.

18. A method for suspending an ancillary structural component from a horizontal surface using a system as claimed in any of claims 2 to 17, comprising
attaching the housing (3) of said swivel device to said fixing arrangement (2);
suspending the suspension means from the base (8a) of the cradle (8); and
attaching the ancillary structural component to the suspension means.

## Patentansprüche

1. Drehlager-Vorrichtung zur Verwendung im Zusammenhang mit einer Aufhängungsbaugruppe, welche ein Aufhängungsmittel und eine Befestigungsanordnung umfasst, wobei die Drehlager-Vorrichtung umfasst:
eine Gabel (8), welche eine Basis (8a), gegenüberliegende Seitenwände (8b) und ein offenes Ende aufweist, wobei die Gabel an den Enden einer Spindel (5) angebracht ist, und
ein hohles, im Wesentlichen zylindrisches Gehäuse (3), welches radial an einem im Wesentlichen zentralen Abschnitt der Spindel angebracht ist, wobei die Spindel durch die Wände des zylindrischen Gehäuses geführt ist, wodurch das Gehäuse innerhalb der gegenüberliegenden Seitenwände angebracht ist, so dass ein Ausmaß an Gelenkigkeit zwischen der Gabel und dem Gehäuse gewährleistet ist, wobei das obere Ende des zylindrischen Gehäuses mit einem inneren umlaufenden Rand versehen ist, um intern zumindest einen Teil einer Befestigungskomponente zu fassen.

2. System zur Aufhängung einer ergänzenden Konstruktionskomponente ausgehend von einer horizontalen Fläche umfassend:
eine Drehlager-Vorrichtung umfassend:
eine Gabel (8), welche eine Basis (8a), gegenüberliegende Seitenwände (8b) und ein offenes Ende aufweist, wobei die Gabel an den Enden einer Spindel (5) angebracht ist; und
ein hohles, im Wesentlichen zylindrisches Gehäuse (3), welches radial an einem im Wesentlichen zentralen Abschnitt der Spindel angebracht ist, wobei die Spindel durch die Wände des zylindrischen Gehäuses geführt ist, wodurch das Gehäuse innerhalb der gegenüberliegenden Seitenwände angebracht ist, so dass ein Ausmaß an Gelenkigkeit zwischen der Gabel und dem Gehäuse gewährleistet ist;
ein Aufhängungsmittel, welches von der Basis der Gabel der Drehlagervorrichtung ausgehend aufgehängt ist, wobei die ergänzende Konstruktionskomponente an das untere Ende der Aufhängungsmittel anbringbar ist; und
eine Befestigungsanordnung (2), welche an das Gehäuse der Drehlagervorrichtung angebracht ist, so dass eine axiale Rotation des zylindrischen Gehäuses bezüglich der Befestigungsanordnung ermöglicht wird, wobei das obere Ende des zylindrischen Gehäuses, das mit einem internen umlaufenden Rand (3a) versehen ist, intern zumindest einen Teil einer Befestigungskomponente fasst, wobei das zumindest eine Teil einer Befestigungskomponente entweder (1) eine Mutter ist, welche auf der Spindel aufgesetzt ist und zur Anbringung der Befestigungsanordnung durch Gewinde an einer externen Gewindestange befestigbar ist, oder (2) der Kopf eines länglichen mit Gewinden versehenen Befestigers ist, so dass der Köper des länglichen mit Gewinden versehenen Befestigers sich zur Anbringung der Befestigungsanordnung nach außen erstreckt.

3. System wie in Anspruch 2 beansprucht, wobei das Aufhängungsmittel eine Aufhängungsstange ist.

4. System wie in einem beliebigen vorhergehenden Anspruch beansprucht, wobei das Ausmaß von Gelenkigkeit im Wesentlichen ein Pendel-Freiheitsgrad ist, welcher der Gabel (8) bezüglich der longitudinalen Achse des Gehäuses (3) gewährt ist.

5. System wie in Anspruch 4 beansprucht, wobei das Ausmaß von Pendelfreiheit 90° oder weniger betragen kann.

6. System wie in Anspruch 4 oder 5 beansprucht, wobei das Ausmaß von Pendelfreiheit zwischen 10° und 50° beträgt.

7. System wie in einem beliebigen vorhergehenden Anspruch beansprucht, wobei die Basis (8a) der Gabel (8) mit einer Öffnung (8c) versehen ist, durch welche ein oberer Abschnitt des Aufhängungsmittels aufgenommen ist.

8. System wie in Anspruch 7 beansprucht, wobei eine Befestigungskomponente innerhalb der Gabel (8) an der Basis (8a) beherbergt ist, so dass ein durch die Öffnung geführtes Aufhängungsmittel befestigt und aufgehängt ist.

9. System wie in Anspruch 8 beansprucht, wobei die Gabel mit gegenüberliegenden Haltewänden (7) versehen ist, welche die Befestigungskomponente fassen, wobei die gegenüberliegenden Haltewände (7) sich von der Basis (8a) der Gabel (8) im rechten Winkel zu den gegenüberliegenden Seitenwänden (8b) erstrecken.

10. System wie in einem der beiden Ansprüche 8 oder 9 beansprucht, wobei die Befestigungskomponente eine Gewindemutter (6) ist, welche intern auf der Basis (8a) der Gabel aufgesetzt ist.

11. System wie in einem beliebigen der Ansprüche 2 bis 7 beansprucht, wobei die Basis (8a) der Gabel (8) gewindemäßig zur Aufhängung des Aufhängungsmittels ausgestaltet ist

12. System wie in einem beliebigen vorhergehenden Anspruch beansprucht, wobei jede der gegenüberliegenden Seitenwände (8b) mit im Wesentlichen in einer Linie befindlichen Löchern zur Aufnahme jeweils eines Endes der Spindel (5) versehen ist.

13. System wie in Anspruch 2 beansprucht, wobei das zylindrische Gehäuse (3) so bemessen ist, dass der gefasste Abschnitt der Befestigungskomponente effektiv auf der Spindel (5) aufgesetzt ist, so dass axiale Bewegung des gefassten Abschnitts des Befestigungsmittels in dem Gehäuse im Wesentlichen unterbunden ist.

14. System wie in einem beliebigen vorhergehenden Anspruch beansprucht, wobei die Spindel (5) einen Stift oder Riegel umfasst, auf welchem sie radial in dem zylindrischen Gehäuse (3) angebracht sein kann.

15. System wie in einem beliebigen vorhergehenden Anspruch beansprucht, wobei die Befestigungsanordnung (2) eine Balken-Klemme, eine Knebel-Baugruppe, eine Keilbefestigungsvorrichtung oder eine Purlin-Klemme umfasst.

16. System wie in Anspruch 15 beansprucht, wobei die Keilbefestigungsvorrichtung ein Multiwedge, ein Alphawedge oder eine Slimdek-Befestigung ist.

17. System wie in Anspruch 15 beansprucht, wobei die Purlin-Klemme eine Umgriff-Purlin-Klemme oder eine einteilige Umgriff-Purlin-Befestigung ist.

18. Verfahren zu Aufhängung einer ergänzenden Konstruktionskomponente ausgehend von einer horizontalen Fläche unter Verwendung eines Systems wie in einem beliebigen der Ansprüche 2 bis 17 beansprucht, umfassend
Anbringen des Gehäuses (3) der Drehlagervorrichtung an die Befestigungsanordnung (2);
Aufhängen des Aufhängungsmittels ausgehend von der Basis (8a) der Gabel (8); und
Anbringen der ergänzenden Konstruktionskomponente an das Aufhängungsmittel.

## Revendications

1. Dispositif de pivotement pour une utilisation conjointe avec un ensemble de suspension qui comprend des moyens de suspension et une structure d'ajustement, ledit dispositif de pivotement comprenant :
un berceau (8) ayant une base (8a), des parois latérales opposées (8b) et une extrémité ouverte, dans lequel ledit berceau est monté sur les extrémités d'une broche (5) et
un boîtier (3) creux, sensiblement cylindrique, monté de manière radiale sur une partie sensiblement centrale de la broche, dans lequel la broche passe à travers les parois du boîtier cylindrique moyennant quoi le boîtier est monté à l'intérieur des parois latérales du berceau afin d'apporter un degré d'articulation entre le berceau et le boîtier, dans lequel l'extrémité supérieure du boîtier cylindrique est munie d'un rebord interne circonférentiel pour bloquer de manière interne au moins une partie d'un élément d'attache.

2. Système pour suspendre un élément structurel secondaire à une surface horizontale, comprenant :
un dispositif de pivotement, comprenant :
un berceau (8) ayant une base (8a), des parois latérales opposées (8b) et une extrémité ouverte, dans lequel ledit berceau est monté sur les extrémités d'une broche (5) ; et
un boîtier (3) creux, sensiblement cylindrique, monté de manière radiale sur une partie sensiblement centrale de la broche, dans lequel la broche passe à travers les parois du boîtier cylindrique moyennant quoi le boitier est monté à l'intérieur des parois latérales du berceau afin d'apporter un degré d'articulation entre le berceau et le boîtier ;
des moyens de suspension suspendus à la base du berceau dudit dispositif de pivotement, ledit élément structurel secondaire pouvant être lié à l'extrémité inférieure desdits moyens de suspension ; et
une structure d'ajustement (2) attachée au boîtier dudit dispositif de pivotement par rapport à la structure d'ajustement afin de permettre une rotation dans un sens axial dudit boîtier cylindrique, dans lequel l'extrémité supérieure du boîtier cylindrique munie d'un rebord interne circonférentiel (3a) bloque de manière interne au moins une partie d'un élément d'attache, dans lequel ladite au moins une partie d'un élément d'attache est soit (1) un écrou (4) posé sur la broche et pouvant être attaché de manière filetée à une tige externe filetée pour attacher la structure d'ajustement, soit (2) la tête d'une attache allongée filetée de sorte que le corps de l'attache allongée filetée s'étend extérieurement pour attacher la structure d'adjustement.

3. Système selon la revendication 2, dans lequel les moyens de suspension sont une tige de suspension.

4. Système selon l'une quelconque des revendications précédentes, dans lequel le degré d'articulation est essentiellement un angle de jeu pendulaire conféré au berceau (8) par rapport à l'axe longitudinal du boîtier (3).

5. Système selon la revendication 4, dans lequel l'angle de jeu pendulaire peut être inférieur ou égal à 90°.

6. système selon la revendication 4 ou 5 dans lequel l'angle de jeu pendulaire est compris entre 10° et 50°.

7. système selon l'une quelconque des revendications précédentes, dans lequel la base (8a) du berceau (8) est munie d'une ouverture (8c) par laquelle est introduite une partie supérieure des moyens de suspension.

8. Système selon la revendication 7, dans lequel un élément d'attache est logé à l'intérieur du berceau (8), à la base (8a), de manière à attacher et à suspendre des moyens de suspension passant à travers ladite ouverture.

9. Système selon la revendication 8, dans lequel le berceau est muni de parois de maintien opposées (7) qui bloquent l'élément d'attache, lesdites parois de maintien opposées (7) s'étendant à partir de la base (8a) du berceau (8) perpendiculairement aux parois latérales opposées (8b).

10. Système selon l'une quelconque des revendications 8 ou 9, dans lequel l'élément d'attache est un écrou fileté (6) posé intérieurement sur la base (8a) du berceau (8).

11. Système selon l'une quelconque des revendications 2 à 7, dans lequel la base (8a) du berceau (8) est adaptée pour être suspendue de manière filetée aux moyens de suspension.

12. Système selon l'une quelconque des revendications précédentes, dans lequel chacune des parois latérales opposées (8b) est munie de trous sensiblement alignés pour recevoir chaque extrémité de la broche (5).

13. Système selon la revendication 2, dans lequel le boîtier cylindrique (3) est calibré de manière à ce que la partie bloquée de l'élément d'attache soit en réalité posée sur la broche (5) afin d'éliminer sensiblement le mouvement axial de la partie bloquée des moyens d'attache dans le boîtier.

14. Système selon l'une quelconque des revendications précédentes, dans lequel la broche (5) comprend une goupille ou une barre sur laquelle peut être monté de manière radiale le boîtier cylindrique (3).

15. système selon l'une quelconque des revendications précédentes dans lequel la structure d'ajustement (2) comprend une attache de poutre, un ensemble à genouillère, un dispositif d'arrêt à cale ou une pince Purlin.

16. Système selon la revendication 15, dans lequel le dispositif d'arrêt à cale est une fixation à clavettes multiples, une cale alpha ou une fixation Slimdek.

17. Système selon la revendication 15, dans lequel la pince Purlin est une pince Purlin coudée ou une fixation Purlin coudée monobloc.

18. Procédé pour suspendre un élément structurel secondaire à une surface horizontale en utilisant un système selon l'une quelconque des revendications 2 à 17, comprenant
en attachant le boîtier (3) dudit dispositif de pivotement à ladite structure d'ajustement (2) ;
en suspendant les moyens de suspension à la base (8a) du berceau (8) ; et
en attachant l'élément structurel secondaire aux moyens de suspension.
